# EUROPÄISCHE PATENTSCHRIFT

(11) **EP 0 890 724 B1**
(45) Veröffentlichungstag und Bekanntmachung des Hinweises auf die Patenterteilung: **10.09.2003**
(21) Anmeldenummer: 98111673.4
(22) Anmeldetag: 25.06.1998
(51) Int. Cl.: F02D 41/14, F02D 35/00

(54) **Verfahren zum Betrieb eines Verbrennungsmotors zum Schutz einer Abgasbehandlungseinrichtung**
Method for operating a combustion engine for protecting an exhaust gas processing device
Procédé de commande de moteur à combustion pour la protection du dispositif de traitement des gaz d'échappement.

(30) Priorität: 11.07.1997 DE 19729676
(43) Veröffentlichungstag der Anmeldung: 13.01.1999
(73) Patentinhaber: Ford Global Technologies, Inc., Dearborn, Michigan 48126 (US)
(72) Erfinder: Phlips, Patrick, Dr., 50858 Köln (DE); Mayer, Thomas E., 50859 Köln (DE); Grieser, Klemens, 40764 Langenfeld (DE); Erdmann, Roland, 50259 Pulheim (DE)
(74) Vertreter: Bonsmann, Manfred, Dipl.-Ing.

(56) Entgegenhaltungen:
- EP-A- 0 627 548
- DE-A- 4 002 206
- DE-A- 4 344 137
- DE-A- 4 433 631
- JP-A- 63 270 244
- BROEZE J.J.: "Combustion in piston engines" 1963 , DE TECHNISCHE UITGEVERIJ , HAARLEM XP002130729 * Seite 86 - Seite 87 *
- ROBERT BOSCH GMBH: "Mémento de technologie automobile. 1re Ed." 1988 , BOSCH ROBERT GMBH , STUTTGART XP002130730 * Seite 371 *
- JP63270244 A

## Beschreibung

Die Erfindung betrifft ein Verfahren zum Betrieb eines Verbrennungsmotors mit einer Abgasbehandlungsanordnung, einer elektronischen Motorsteuerung mit einer Einrichtung zur Festlegung des dem Verbrennungsmotor zuzuführenden Luft-/Kraftstoffverhältnisses Lambda abhängig von verschiedenen Motorbetriebsparametern, wobei der Einstellbereich für Lambda auch Werte größer als 1,0 umfaßt, einer Einrichtung zur Einstellung des von der Motorsteuerung vorgegebenen Luft-/Kraftstoffverhältnisses sowie einer Einrichtung zur näherungsweisen Bestimmung der Temperatur der Abgasbehandlungseinrichtung.

Die Abgasbehandlungsanordnung kann zum einen einen konventionellen Dreiwegekatalysator aufweisen. Zum anderen kann aber auch zusätzlich eine Stickoxidfalle (NOₓ-Trap) vorgesehen sein. Die Stickoxidfalle verringert insbesondere die bei einem kraftstoffsparenden Magerbetrieb des Motors auftretenden Stickoxidemissionen.

Sowohl bei Dreiwegekatalysatoren als auch bei Stickoxidfallen besteht ein bekanntes Problem darin, daß bestimmte, vorgegebene Grenztemperaturen der aktiven Substanzen nicht überschritten werden dürfen, um eine Beschädigung bzw. vorschnelle Alterung der Abgasbehandlungsanordnung zu vermeiden. Es ist heute vielfach üblich, die Abgasbehandlungsanordnung relativ nahe am Motor anzuordnen, um ein schnelles Aufheizen derselben nach einem Motorkaltstart zu erreichen. Bei dieser Anordnung kann die Abgasbehandlungsanordnung - vor allem bei einem längeren Motorbetrieb im Vollastbereich - Temperaturen erreichen, die im Bereich der Beschädigungsgrenztemperatur liegen.

Es ist bekannt, Maßnahmen zur Senkung der Abgastemperatur (z.B. künstliche Gemischanreicherung) zu treffen, wenn die Beschädigungsgrenztemperatur überschritten zu werden droht. So offenbart die DE 43 44 137 A1 ein abgestuftes Verfahren, bei dem mit Annäherung an eine Grenztemperatur zunehmend gravierendere Maßnahmen zur Kühlung des Katalysators eingeleitet werden. Die letzte Maßnahme stellt dabei die Anfettung des Luft-/Kraftstoffgemisches dar. Diese Maßnahme wird in unmittelbarer Nähe der maximal zulässigen Katalysatortemperatur ergriffen, die Reihenfolge der Maßnahmen Kann aber auch geändert werden.

Weiterhin ist es aus der JP 63-270244 bekannt, zum Schutz eines Katalysators vor Überhitzung bei Überschreiten einer vorgegebenen Temperatur die Kraftstoffabschaltung im Schiebebetrieb zu unterbinden.

Es wird jedoch bislang bei der Steuerung des Verbrennungsmotors nicht beachtet, daß die Abgasbehandlungsanordnung auch bereits unterhalb der Beschädigungsgrenztemperatur in Mitleidenschaft gezogen werden kann, wenn bestimmte Motorbetriebsbedingungen vorliegen.

Die Aufgabe der vorliegenden Erfindung liegt darin, ein Verfahren der eingangs genannten Art zu schaffen, mit dem auf kostengünstige Weise und ohne nennenswerten Einfluß auf die Kraftstoffökonomie eine Beschädigung bzw. vorschnelle Alterung der Abgasbehandlungsanordnung auch unterhalb der Beschädigungsgrenztemperatur vermieden werden kann.

Diese Aufgabe wird mit den Merkmalen gemäß Anspruch 1 gelöst.

Es wird somit erfindungsgemäß bei Überschreiten der vorgegebenen Grenztemperatur verhindert, daß der Motor mit einem geringeren Kraftstoffanteil, als es einem stöchiometrischen Luft-/Kraftstoffverhältnis (Lambda=1,0) entspricht, betrieben wird.

Die vorgegebene Grenztemperatur wird so gewählt, daß diese etwa 50 bis 150 °C unterhalb der Beschädigungsgrenztemperatur des temperaturempfindlichsten Bauteils der Abgasbehandlungseinrichtung liegt.

Im Rahmen der Erfindung ist vorgesehen, daß eine Schubabschaltung vorgesehen ist, durch die der Motor bei Vorliegen eines Schiebebetriebszustandes ohne Kraftstoffeinspritzung betrieben werden kann, wobei oberhalb einer vorgegebenen Grenztemperatur im Schiebebetriebszustand die Abschaltung der Kraftstoffeinspritzung unterdrückt und der Verbrennungsmotor statt dessen stöchiometrisch oder fett betrieben wird.

Die Schubabschaltung wird von der elektronischen Motorsteuerung zwecks Kraftstoffeinsparung normalerweise aktiviert, wenn eine negative Drehmomentanforderung vorliegt bzw. ein Mindestdrehmoment unterschritten ist, wie z.B. bei Verzögerungen und Bergabfahrten. Das Luft-/Kraftstoffverhältnis Lambda geht dabei gegen unendlich. Eine völlige Abschaltung bzw. Wiedereinschaltung der Kraftstoffzufuhr kann allgemein nicht innerhalb eines Arbeitstaktes des Verbrennungsmotors erfolgen. Dies kann dazu führen, daß bei Einleitung bzw. Aufhebung der Schubabschaltung während einiger Arbeitstakte eine so geringe Kraftstoffmenge in die Motorzylinder gelangt, daß eine Verbrennung innerhalb des Motors nicht mehr stattfinden kann. Der unverbrannte Kraftstoff gelangt dann in die Abgasbehandlungsanordnung. Dort findet eine Nachverbrennung statt. Da diese Verbrennung zeitlich und örtlich stark begrenzt ist, kann dies zu einer lokalen Überhitzung der aktiven Substanzen der Abgasbehandlungsanordnung führen (sog. hot spots), auch wenn die Durchschnittstemperatur der Abgasbehandlungsanordnung noch unterhalb der Zerstörungsgrenztemperatur liegt. Dies wird erfindungsgemäß dadurch verhindert, daß für den Fall, daß eine vorgegebene Grenztemperatur der Abgasbehandlungsanordnung überschritten ist, eine Schubabschaltung nicht mehr erlaubt wird.

Weiterhin ist erfindungsgemäß vorgesehen, daß ein Magerbetriebsmodus vorgesehen ist, in dem der Motor bei Vorliegen eines vorgegebenen Magerbetriebszustandes mit einem mageren Luft-/Kraftstoffgemisch betrieben werden kann, wobei oberhalb einer vorgegebenen Grenztemperatur im Magerbetriebszustand der Magerbetrieb unterdrückt und der Verbrennungsmotor statt dessen stöchiometrisch oder fett betrieben wird.

Eine derartige Unterdrückung des Magerbetriebs bei Überschreiten einer Grenztemperatur dient vor allem zum Schutz einer in der Abgasbehandlungsanordnung vorgesehenen Stickoxidfalle. Die aktiven Substanzen der Stickoxidfalle können nämlich oberhalb einer bestimmten Grenztemperatur durch den bei magerem Motorbetrieb im Abgas vorhandenen unverbrannten Sauerstoff in unerwünschter Weise oxidiert werden. Um dies zu verhindern, wird von der Motorsteuerung in diesem Falle der Übergang in den Magermodus unterdrückt.

Da die möglichen Ursachen für eine Beschädigung der Abgasbehandlungsanordnung für die beiden vorgenannten Betriebsmodi Schiebe- und Magerbetrieb unterschiedlich sind und Beschädigungen deshalb nicht notwendigerweise in beiden Betriebsmodi oberhalb gleicher Temperaturen auftreten, ist vorgesehen, daß die vorgegebene Grenztemperatur für den Fall der Unterdrückung der Abschaltung der Kraftstoffeinspritzung im Schiebebetrieb unterschiedlich ist von der Grenztemperatur für den Fall der Unterdrückung des Magerbetriebs. Es existieren dann drei Temperaturbereiche, wobei bei einer Temperatur der Abgasbehandlungsanordnung unterhalb beider vorgegebener Grenztemperaturen beide Betriebsmodi erlaubt sind, bei einer Temperatur zwischen den beiden Grenztemperaturen nur der Betriebsmodus mit der höheren Grenztemperatur erlaubt ist und bei einer Temperatur oberhalb beider Grenztemperaturen beide Betriebsmodi unterdrückt werden und der Motor somit ausschließlich fett oder stöchiometrisch betrieben wird.

Die näherungsweise Bestimmung der Temperatur der Abgasbehandlungseinrichtung kann anhand eines in räumlicher Nähe der Abgasbehandlungsanordnung im Abgasstrom angeordneten Temperatursensors erfolgen.

Da bei einer derartigen Abgastemperaturmessung die thermische Trägheit der Abgasbehandlungsanordnung nicht berücksichtigt wird, kann weiterhin vorgesehen sein, daß die Temperatur der Abgasbehandlungseinrichtung über ein Temperaturmodell bestimmt wird. Dieses mathematische Modell kann die Temperatur der Abgasbehandlungsanordnung beispielsweise anhand der gemessenen Abgastemperatur, des Abgasmassenstroms, der Wärmekapazität der Abgasbehandlungsanordnung, der Fahrzeuggeschwinidgkeit, der Umgebungstemperatur usw. bestimmen. Es ist auch denkbar, auf eine Abgastemperaturmessung zu verzichten und die Temperatur der Abgasbehandlungsanordnung vollständig anhand des Temperaturmodells zu berechnen.

Die Erfindung wird nachfolgend anhand der Zeichnungen beispielhaft näher erläutert. Es zeigen:
- Fig. 1: eine stark schematisierte Darstellung einer Anordnung zur Durchführung des erfindungsgemäßen Verfahrens und
- Fig. 2: ein schematisches Drehzahl-/Drehmomentkennfeld zur Erläuterung des erfindungsgemäßen Verfahrens.

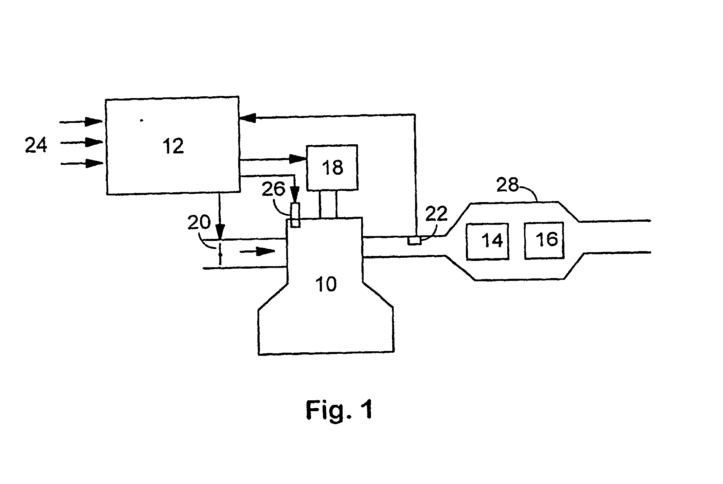

Gemäß Fig. 1 wird ein Mehrzylinderverbrennungsmotor 10 von einer elektronischen Motorsteuerung 12, die eine Vielzahl von Eingangssignalen 24, wie z.B. die aktuelle Motordrehzahl oder die aktuelle Stellung des Fahrergaspedals erhält, gesteuert. Die Motorsteuerung führt Algorithmen zur Ansteuerung einer elektronischen Drosselklappe 20, einer Zündanlage 18 und einer Einspritzanlage 26 aus. Über die elektronische Drosselklappe 20 und die Einspritzanlage 18 kann das Luft-/Kraftstoffverhältnis Lambda des den Zylindern zugeführten Gemisches in weiten Grenzen verändert werden, insbesondere kann unter bestimmten Betriebsbedingungen ein mageres Luft-/Kraftstoffverhältnis eingestellt werden (z.B. Lambda=1,6) oder die Kraftstoffzufuhr völlig unterbunden werden (Schiebebetrieb). Die Motorabgase werden einer Abgasbehandlungsanordnung 28 zugeführt. Diese kann z.B. aus einem Dreiwegekatalysator 14 und einer Stickoxidfalle 16 bestehen. Durch einen Temperatursensor 22 wird die Abgastemperatur in der Nähe der Abgasbehandlungsanordnung 28 gemessen.

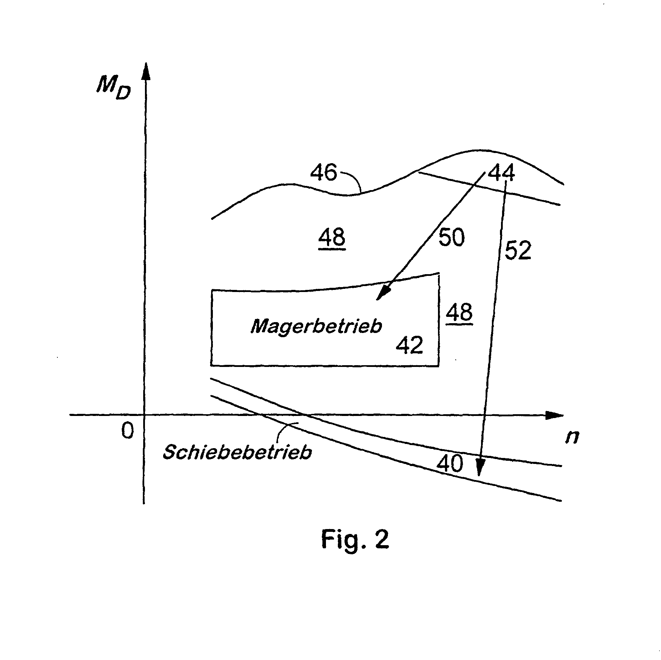

Gemäß der schematischen Darstellung in Fig. 2 wird, falls die Temperatur der Abgasbehandlungsanordnung unterhalb einer vorgegebenen Grenztemperatur liegt, der Betriebsmodus von der elektronischen Motorsteuerung 12 des Verbrennungsmotors 10 anhand eines Kennfeldes abhängig von der Motordrehzahl (*n*) und dem benötigten Motordrehmoment (*M*_{*D*}) ermittelt. In Fig. 2 ist die Vollastkurve mit 46 bezeichnet. Bei niedrigen Drehzahlen und Drehmomenten wird der Motor mit einem mageren Luft-/Kraftstoffverhältnis betrieben (Bereich 42). Bei niedrigeren Motordrehmomenten wird der Motor entweder im Leerlaufmodus (nicht dargestellt) oder im Schiebebetrieb 40, bei dem eine Kraftstoffzufuhr vollständig unterbunden wird, betrieben. In den mit 48 gekennzeichneten Bereichen rechts und oberhalb des Magerbetriebsbereichs 42 wird der Motor mit einem stöchiometrischen oder - in der Nähe der Vollastkurve 46 - einem leicht fetten Gemisch betrieben, da im Magerbetrieb die entsprechenden Drehzahl-/Drehmomentanforderungen nicht zu befriedigen wären.

Wird der Motor längere Zeit im Vollastbereich betrieben, z.B. in einem mit 44 gekennzeichneten Bereich, so kann es vorkommen, daß die Abgasbehandlungsanordnung 28 Temperaturen erreicht, die zwar unterhalb der Zerstörungsgrenztemperatur des empfindlicheren Bauteils des Abgasbehandlungsanordnung liegen (im allgemeinen die Zerstörungsgrenztemperatur der Stickoxidfalle), bei denen aber ein Übergang in den Magerbetrieb bzw. eine Schubabschaltung zu einer Beschädigung bzw. vorschnellen Alterung der Abgasbehandlungsanordnung führen könnte.

Um dies zu vermeiden, wird die Temperatur der Abgasbehandlungsanordnung anhand der mittels des Sensors 22 gemessenen Abgastemperatur und eines Temperaturmodells der Abgasbehandlungsanordnung bestimmt. Liegt diese Temperatur oberhalb einer vorgegebenen Grenztemperatur, wird ein Übergang in den Magerbetrieb bzw. eine Schubabschaltung nicht erlaubt. Betroffen sind z.B. die mit 50 bzw. 52 bezeichneten Übergänge vom Vollast- in den Magerbetrieb bzw. vom Vollast in den Schiebebetrieb. Statt im Mager- oder Schiebebetrieb wird der Motor in diesem Falle auch in den Bereichen 42 bzw. 40 mit einem näherungsweise stöchiometrischen Luft-/Kraftstoffverhältnis betrieben. Dies geschieht so lange, bis die Abgasbehandlungsanordnung auf eine Temperatur unterhalb der vorgegebenen Grenztemperatur abgekühlt ist.

Da Übergänge von einem länger andauernden Vollastbetrieb zum Mager- bzw. Schiebebetrieb über die Betriebszeit eines Kraftfahrzeuges erfahrungsgemäß relativ selten auftreten und die Sperrung der entsprechenden Betriebsbereiche, bis die Abgasbehandlungsanordnung entsprechend abgekühlt ist, auch nur eine begrenzte Zeit andauert (z.B. 10 s), ist der erfindungsgemäß verursachte Kraftstoffmehrverbrauch praktisch vernachlässigbar. Das erfindungsgemäße Verfahren gewährleistet jedoch auch bei extremen Betriebsübergängen eine lange Lebensdauer der Abgasbehandlungsanordnung.

## Patentansprüche

1. Verfahren zum Betrieb eines Verbrennungsmotors (10) mit einer Abgasbehandlungsanordnung (28), einer elektronischen Motorsteuerung (12) mit einer Einrichtung zur Festlegung des dem Verbrennungsmotor zuzuführenden Luft-/Kraftstoffverhältnisses Lambda abhängig von verschiedenen Motorbetriebsparametern, wobei der Einstellbereich für Lambda auch Werte größer als 1,0 umfaßt, einer Einrichtung zur Einstellung des von der Motorsteuerung vorgegebenen Luft-/Kraftstoffverhältnisses sowie einer Einrichtung zur näherungsweisen Bestimmung der Temperatur der Abgasbehandlungseinrichtung, **dadurch gekennzeichnet, daß** bei Überschreiten einer vorgegebenen Grenztemperatur der Abgasbehandlungseinrichtung ausschließlich ein Luft-/Kraftstoffgemisch mit Lambda näherungsweise gleich oder kleiner 1,0 eingestellt wird,
und daß die vorgegebene Grenztemperatur für den Fall einer Unterdrückung der Abschaltung der Kraftstoffeinspritzung im Schiebebetrieb unterschiedlich ist von der Grenztemperatur für den Fall einer Unterdrückung des Magerbetriebs.

2. Verfahren nach Anspruch 1, wobei die Abgasbehandlungseinrichtung einen Dreiwegekatalysator (14) aufweist.

3. Verfahren nach Anspruch 1 oder 2, wobei die Abgasbehandlungseinrichtung eine Stickoxidfalle (16) aufweist.

4. Verfahren nach einem der Ansprüche 1 bis 3, **dadurch gekennzeichnet, daß** die vorgegebene Grenztemperatur etwa 50 bis 100 °C unterhalb der Beschädigungsgrenztemperatur des temperaturempfindlichsten Bauteils der Abgasbehandlungseinrichtung (28) liegt.

## Claims

1. Method for operating an internal combustion engine (10) with an exhaust gas processing device (28), electronic engine control (12) with a device for fixing the lambda air /- fuel ratio to be supplied to the internal combustion engine depending upon various engine operating parameters wherein the adjustment area for lambda also incorporates values greater than 1.0, a device for adjusting the air / fuel ratio given by the engine control and a device for the approximate determination of the temperature of the exhaust gas processing device **characterised in that** when a given boundary temperature of the exhaust gas processing device is exceeded exclusively an air / fuel mix with lambda approximately equal to or smaller than 1.0 is set,
and that the given boundary temperature for the case of suppressing the disconnection of the fuel injection in overrunning is different from the boundary temperature for the case of suppressing of the lean operation.

2. Method according to claim 1 wherein the exhaust gas processing device has a three-way catalytic converter (14).

3. Method according to claim 1 or 2 wherein the exhaust gas processing device has a nitrogen oxide trap (16).

4. Method according to one of the claims 1 to 3 **characterised in that** the given boundary temperature lies approximately 50 to 100°C below the boundary temperature of damage to the temperature-sensitive component of the exhaust gas processing device (28).

## Revendications

1. Procédé d'exploitation d'un moteur à explosion (10) comportant un dispositif de traitement des gaz d'échappement (28), une gestion moteur électronique (12) avec un dispositif de détermination du rapport air-carburant lambda à fournir au moteur à explosion en fonction de différents paramètres de fonctionnement du moteur, dans lequel la plage de réglage de lambda comprend aussi des valeurs supérieures à 1,0, un dispositif de réglage du rapport air-carburant défini par la gestion moteur ainsi qu'un dispositif de détermination approximative de la température du dispositif de traitement des gaz d'échappement, **caractérisé par le fait**
**qu'**en cas de dépassement d'une température limite prédéfinie du dispositif de traitement des gaz d'échappement, il est réglé exclusivement un mélange air-carburant avec un lambda approximativement égal ou inférieur à 1,0
et **que** la température limite prédéfinie pour le cas d'une suppression de la coupure de l'injection de carburant en fonctionnement en décélération ou sur son erre est différente de la température limite pour le cas d'une suppression du fonctionnement en mélange pauvre.

2. Procédé selon la revendication 1, dans lequel le dispositif de traitement des gaz d'échappement présente un convertisseur catalytique à trois voies (14).

3. Procédé selon la revendication 1 ou 2, dans lequel le dispositif de traitement des gaz d'échappement présente un piège à oxydes d'azote (16).

4. Procédé selon l'une des revendications 1 à 3, **caractérisé par le fait que** la température limite prédéfinie est inférieure d'environ 50 à 100 °C à la température limite de détérioration de l'élément le plus sensible à la température du dispositif de traitement des gaz d'échappement (28).
